# EUROPÄISCHE PATENTSCHRIFT

(11) **EP 1 621 784 B1**
(45) Veröffentlichungstag und Bekanntmachung des Hinweises auf die Patenterteilung: **22.12.2010**
(21) Anmeldenummer: 05016340.1
(22) Anmeldetag: 27.07.2005
(51) Int. Cl.: F16C 29/06, F16C 33/66

(54) **Linearvorrichtung**
Linear guide device
Guidage linéaire

(30) Priorität: 28.07.2004 DE 102004036529
(43) Veröffentlichungstag der Anmeldung: 01.02.2006
(73) Patentinhaber: Bosch Rexroth Mechatronics GmbH, 97424 Schweinfurt (DE)
(72) Erfinder: Haub, Alfred, 97511 Lülsfeld (DE)
(74) Vertreter: Herzog, Markus

(56) Entgegenhaltungen:
- EP-A1- 0 874 172
- EP-A2- 1 416 178
- DE-A1- 4 141 038
- DE-A1- 19 830 140
- US-B1- 6 190 046

## Beschreibung

Die Erfindung betrifft eine Linearvorrichtung mit einer ersten, im Wesentlichen stangenförmig ausgebildeten Funktionseinheit und einer zweiten, die stangenförmige Funktionseinheit zumindest teilweise umgreifenden Funktionseinheit, wobei die beiden Funktionseinheiten mittels wenigstens eines endlosen Wälzkörperumlaufs relativ zueinander bewegbar sind, der einen lasttragenden Wälzkörperkanalabschnitt, einen Rückführkanalabschnitt und zwei den lasttragenden Wälzkörperkanalabschnitt und den Rückführkanalabschnitt miteinander verbindende Umlenkkanalabschnitte umfasst, wobei die zweite Funktionseinheit einen Hauptkörper sowie wenigstens eine Endplatteneinheit umfasst, die mit einer Anlagefläche an einer Stirnseite des Hauptkörpers anliegt und in der ein Umlenkkanalabschnitt des Wälzkörperumlaufs ausgebildet ist, und wobei in der Endplatteneinheit eine sich zumindest teilweise in Umfangsrichtung um die stangenförmige Funktionseinheit erstreckende und zur Anlagefläche hin offene Schmiernut vorgesehen ist.

Obgleich die Erfindung im Folgenden hauptsächlich am Beispiel einer Linearführungsvorrichtung mit einer Führungsschiene als stangenförmig ausgebildete Funktionseinheit und einem Führungswagen als die Führungsschiene zumindest teilweise umgreifende Funktionseinheit erläutert werden wird, sei bereits an dieser Stelle darauf hingewiesen, dass die Erfindung mit Vorteil auch bei anderen Arten von Linearvorrichtungen eingesetzt werden kann, beispielsweise Wälzkörperbüchsenführungen, insbesondere Kugelbüchsenführungen, Keilwellenführungen (in der Fachsprache auch oft "ball splines" genannt) oder Linearantriebsvorrichtungen, beispielsweise Wälzkörpergewindetrieben, insbesondere Kugelgewindetrieben.

Die wenigstens eine Endplatteneinheit ist mit dem Hauptkörper herkömmlich über Schrauben verbunden. Sie kann an diesem jedoch auch mittels Rastelementen befestigt sein.

Üblicherweise ist an der wenigstens einen Endplatteneinheit ein Schmiermittelzufuhranschluss vorgesehen, um die in dem wenigstens einen Wälzkörperumlauf aufgenommenen Wälzkörper mit Schmiermittel versorgen zu können. Um verhindern zu können, dass aus der zur Anlagefläche der Endplatteneinheit an dem Hauptkörper hin offenen Schmiernut Schmiermittel zwischen dem Hauptkörper und der Endplatteneinheit austritt, wurden im Stand der Technik bereits verschiedene Lösungsansätze vorgeschlagen.

So ist es aus der US 4,850,720 bekannt, unmittelbar neben der Schmiernut Dichtlippen vorzusehen, die von der Anlagefläche der Endplatteneinheit geringfügig vorstehen. Bei der aus der US 5,139,347 bekannten Linearvorrichtung sind entsprechende Dichtlippen am Rand der Endplatteneinheit vorgesehen.

Demgegenüber schlägt die gattungsbildende EP 1 416 178 A2 vor, die gesamte Anlagefläche der Endplatteneinheit an dem Hauptkörper als gewölbte Fläche auszubilden und die Endplatteneinheit über vier in den Ecken der Anlagefläche angeordnete Befestigungsschrauben mit dem Hauptkörper zu verbinden. Die EP 1 416 178 A2 geht dabei von einem Stand der Technik aus, bei welchem die Endplatteneinheit mit dem Hauptkörper über lediglich zwei Befestigungselemente verbunden war, so dass eine Spaltbildung zwischen der Endplatteneinheit und dem Hauptkörper und damit die Gefahr eines unerwünschten Schmierstoffaustritts zwischen Endplatteneinheit und Hauptkörper nicht ausgeschlossen werden konnte. Erst durch die gewölbte Ausbildung der Anlagefläche sowie den Einsatz von vier Befestigungsschrauben, so die EP 1 416 178 A2, könne die gewünschte Dichtwirkung zuverlässig sichergestellt werden.

Es ist das Verdienst der Erfinder der vorliegenden Anmeldung, sich über diese in der EP 1 416 178 A2 deutlich formulierte technische Fehlvorstellung hinweggesetzt zu haben und mit dem Ziel einer Vereinfachung der Befestigung der Endplatteneinheit an dem Hauptkörper ohne gleichzeitige Einschränkung der Sicherheit dieser Verbindung gegenüber einem unerwünschten Austritt von Schmierstoff zwischen Endplatteneinheit und Hauptkörper die im Anspruch 1 definierte Lösung entwickelt zu haben. Danach braucht nicht die gesamte Anlagefläche gekrümmt ausgebildet zu sein, sondern es genügt, einen der Schmiernut benachbarten und diese Schmiernut umgebenden Abschnitt der Anlagefläche gegenüber der restlichen Anlagefläche erhöht auszubilden, und die Endplatteneinheit an dem Hauptkörper mittels lediglich zweier Befestigungselemente zu befestigen.

Vorteilhafterweise kann die Endplatteneinheit ein Basisteil und ein die Anlagefläche umfassendes Einlegeteil umfassen, wobei das Einlegeteil aus einem weicheren Material, insbesondere einem weicheren Kunststoff, gefertigt ist als das Basisteil. Beispielsweise kann das Basisteil aus POM (Polyoxymethylen) und das Einlegeteil aus Hytrel gefertigt sein. Dadurch, dass das Einlegeteil aus einem weicheren Material gefertigt ist als das Basisteil, kann es bei der Befestigung der Endplatteneinheit an dem Hauptkörper in einfacher Weise zwischen dem Basisteil und dem Hauptkörper komprimiert werden, wodurch die Abdichtungswirkung verbessert werden kann.

Zusätzlich oder alternativ kann die Dichtungswirkung auch dadurch verbessert werden, dass die Schmiernut zumindest teilweise von einer Dichtlippe umgeben ist. Da die von den beiden Befestigungselementen ausgehende Kompressionswirkung mit zunehmendem Abstand von den Befestigungselementen abnimmt, kann dabei ferner vorgesehen sein, dass die Höhe der Dichtlippe über dem erhöhten Abschnitt in einer zur Verbindungslinie zwischen den Befestigungselementen im Wesentlichen parallel verlaufenden Richtung im Allgemeinen konvex verläuft.

Aus ähnlichen Überlegungen kann auch der Abstand des erhöhten Abschnitts von der restlichen Anlagefläche in einer von der Verbindungslinie zwischen den Befestigungselementen zum Rand der Endplatte hin weisenden und vorzugsweise orthogonal zu der Verbindungslinie verlaufenden Richtung zunehmen, oder/und der erhöhte Abschnitt in einer zur Verbindungslinie zwischen den Befestigungselementen im Wesentlichen parallel verlaufenden Richtung im Allgemeinen konvex verlaufen.

Grundsätzlich ist es zwar möglich, dass der erhöhte Abschnitt längs seines gesamten Umfangsrands mittels einer Stufe mit der restlichen Anlagefläche verbunden ist bzw. in diese übergeht. Vorzugsweise wird jedoch vorgeschlagen, dass sich der erhöhte Abschnitt zumindest der Verbindungslinie benachbart im Wesentlichen auf dem Niveau der restlichen Anlagefläche befindet.

In Weiterbildung der Erfindung wird vorgeschlagen, dass die Schmiernut eine Schmierstoff-Verteilungsnut ist, welche zum einen mit wenigstens zwei Anschlussstellen zum Zuführen von Schmierstoff und zum anderen über einen Durchgang mit dem eigentlichen Schmierkanalsystem in Verbindung steht, über das dem wenigstens einen Wälzkörperumlauf Schmierstoff zugeführt wird. Grundsätzlich ist es jedoch ebenso denkbar, dass die Schmiernut Teil dieses Schmierkanalsystems ist.

Wie vorstehend bereits angedeutet wurde, kann die Linearvorrichtung eine Linearführungsvorrichtung sein. Beispielsweise kann sie eine Schienenführung sein, wobei die stangenförmige erste Funktionseinheit eine Führungsschiene umfasst, und die zweite Funktionseinheit einen Führungswagen umfasst. Ferner kann sie eine Wälzkörperbüchsenführung, beispielsweise eine Kugelbüchsenführung sein, wobei die stangenförmige erste Funktionseinheit eine Rundwelle umfasst, und die zweite Funktionseinheit eine Wälzkörperbüchse umfasst. Schließlich kann sie auch eine Keilwellenführung sein, wobei die stangenförmige erste Funktionseinheit eine Profilwelle umfasst, und die zweite Funktionseinheit eine Wälzkörperbüchse umfasst. Darüber hinaus ist es jedoch auch möglich, dass die Linearvorrichtung eine Linearantriebsvorrichtung ist, beispielsweise ein Wälzkörpergewindetrieb, wobei die stangenförmige erste Funktionseinheit eine Gewindespindel umfasst, und die zweite Funktionseinheit eine Wälzkörpermutter umfasst.

Die Erfindung betrifft ferner eine Linearvorrichtung mit einer ersten, im Wesentlichen stangenförmig ausgebildeten Funktionseinheit und einer zweiten, die stangenförmige Funktionseinheit zumindest teilweise umgreifenden Funktionseinheit, wobei die beiden Funktionseinheiten mittels wenigstens eines endlosen Wälzkörperumlaufs relativ zueinander bewegbar sind, der einen lasttragenden Wälzkörperkanalabschnitt, einen Rückführkanalabschnitt und zwei den lasttragenden Wälzkörperkanalabschnitt und den Rückführkanalabschnitt miteinander verbindende Umlenkkanalabschnitte umfasst, wobei die zweite Funktionseinheit einen Hauptkörper sowie wenigstens eine Endplatteneinheit umfasst, die mit einer Anlagefläche an einer Stirnfläche des Hauptkörpers anliegt und in der ein Umlenkkanalabschnitt des Wälzkörperumlaufs ausgebildet ist, wobei die Endplatteneinheit ein Basisteil und ein die Anlagefläche umfassendes Einlegeteil umfasst, welches mit einer weiteren Anlagefläche an einer Gegenanlagefläche des Basisteils anliegt, wobei in dem Einlegeteil eine sich zumindest teilweise in Umfangsrichtung um die stangenförmige Funktionseinheit erstreckende und zu der weiteren Anlagefläche hin offene Schmiernut vorgesehen ist, und wobei die Endplatteneinheit an dem Hauptkörper mittels lediglich zweier Befestigungselemente befestigbar ist, und dass ein der Schmiernut benachbart angeordneter und diese Schmiernut umgebender Abschnitt der weiteren Anlagefläche gegenüber der restlichen weiteren Anlagefläche erhöht ausgebildet ist.

Die Erfindung wird im Folgenden an einem Ausführungsbeispiel anhand der beigefügten Zeichnungen näher erläutert werden. Es stellt dar:
- Fig. 1: eine perspektivische Ansicht einer erfindungsgemäßen Linearführungsvorrichtung;
- Fig. 2: eine perspektivische Ansicht einer Endplatteneinheit der Linearführungsvorrichtung gemäß Fig. 1;
- Fig. 3: eine perspektivische Ansicht eines Einlegeteils der Endplatteneinheit gemäß Fig. 2;
- Fig. 4: eine perspektivische Ansicht einer zweiten Ausführungsform einer erfindungsgemäß ausgebildeten Endplatteneinheit; und
- Fig. 5: ein perspektivische Ansicht des Einlegeteils der Endplatteneinheit gemäß Fig.4 in Ansicht aus Richtung V in Fig. 4.

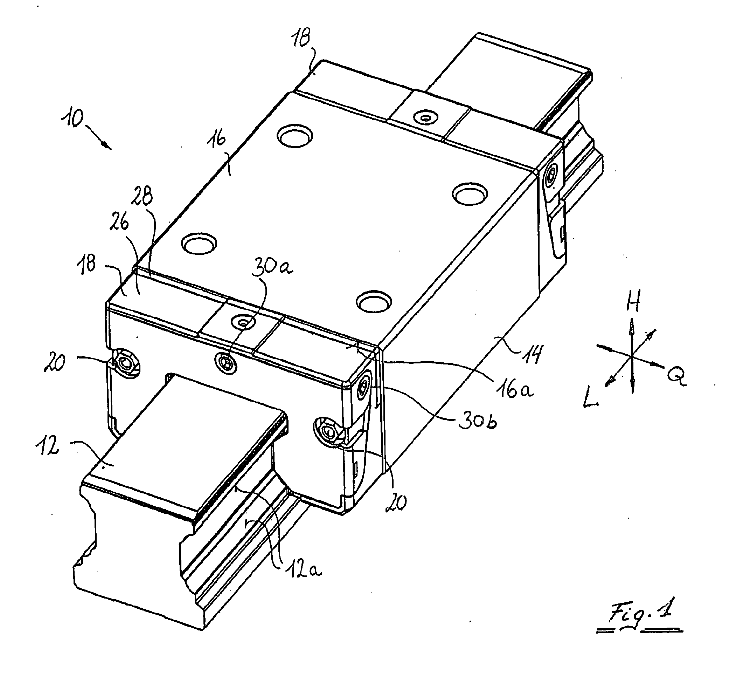

In Fig. 1 ist eine erfindungsgemäße Linearführungsvorrichtung ganz allgemein mit 10 bezeichnet. Sie umfasst eine sich in Längsrichtung L erstreckende, längliche Führungsschiene 12 und einen auf der Führungsschiene 12 geführten, relativ zu dieser in deren Längsrichtung L verlagerbaren Führungswagen 14.

Der Führungswagen 14 umfasst einen Hauptkörper 16 und zwei im Wesentlichen identisch ausgebildete Endplatteneinheiten 18. Jede der beiden Endplatteneinheiten 18 ist mittels lediglich zweier Befestigungsschrauben 20 mit dem Hauptkörper 16 des Führungswagens 14 verbunden.

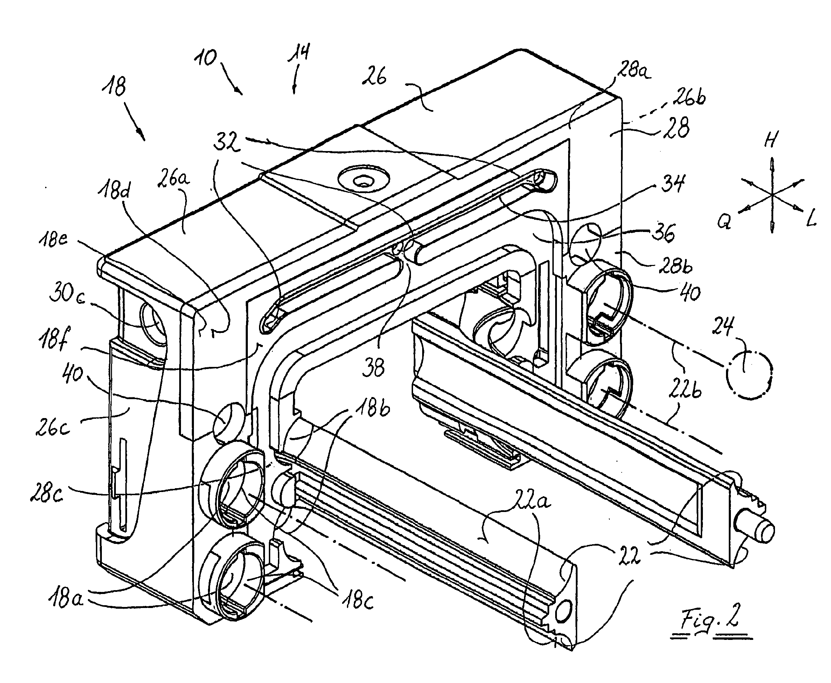

In dem Führungswagen 14 sind in dem dargestellten Ausführungsbeispiel insgesamt vier endlose Wälzkörperumläufe 22 vorgesehen (siehe Fig. 2), von denen jeder einen lasttragenden Wälzkörperkanalabschnitt, einen Rückführkanalabschnitt und zwei den lasttragenden Wälzkörperkanalabschnitt und den Rückführkanalabschnitt miteinander verbindende Umlenkkanalabschnitte umfasst. Der lasttragende Wälzkörperkanalabschnitt wird dabei von einer führungswagenseitigen lasttragenden Wälzkörperlaufbahn 22a und einer führungsschienenseitigen lasttragenden Wälzkörperlaufbahn 12a (s. Fig. 1) gebildet. Die Umlenkkanalabschnitte 18a erstrecken sich gemäß Fig. 2 zwischen den beiden Mündungsöffnungen 18b und 18c der Endplatteneinheit 18. Die Rückführkanalabschnitte 22b sind in Fig. 2 lediglich strichpunktiert angedeutet, ebenso wie die in den Wälzkörperumläufen 22 als endlose Reihe umlaufende Wälzkörper 24.

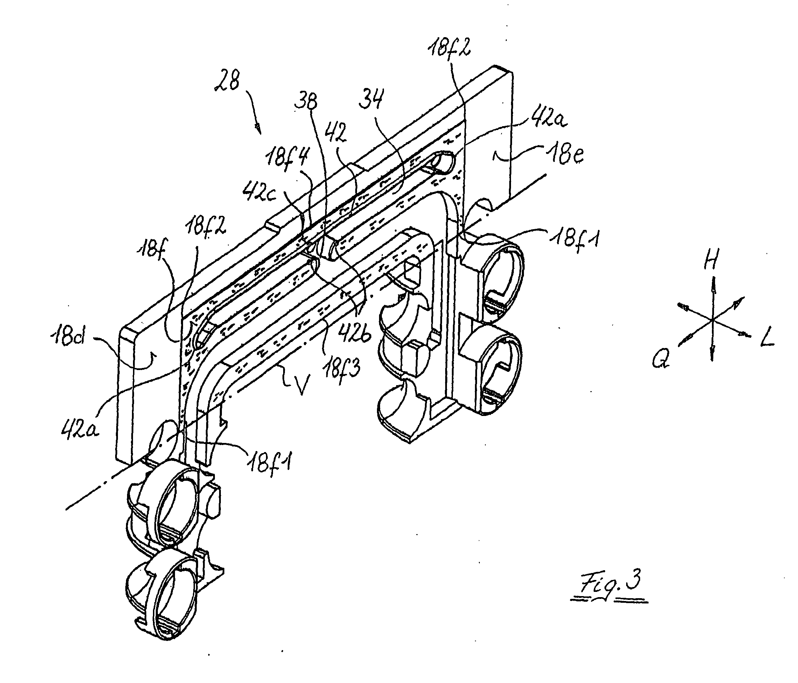

Wie in Fig. 2 ferner dargestellt ist, umfasst die Endplatteneinheit 18 ein Basisteil 26 und ein Einlegeteil 28, die beide vorzugsweise aus Kunststoff gefertigt sind. Dabei ist das Basisteil 26 beispielsweise aus dem relativ starren Kunststoff Polyoxymethylen (POM) und das Einlegeteil 28 aus dem weicheren Kunststoff Hytrel gefertigt, beide vorzugsweise als Spritzgussteile. In Fig. 3 ist das Einlegeteil 28 nochmals gesondert dargestellt.

In dem Basisteil 26 der Endplatteneinheit 18 sind drei Anschlussstellen 30a, 30b, 30c zur Zufuhr von Schmiermittel vorgesehen, von denen in Fig. 1 eine erste 30a und eine zweite 30b und in Fig. 3 eine dritte 30c dargestellt sind. Über nicht dargestellte Leitungsabschnitte in dem Basisteil 26 und Übertrittslöcher 32 in dem Einlegeteil 28 gelangt der Schmierstoff in eine Schmierstoff-Verteilungsnut 34, die über eine zentrale Durchtrittsöffnung 38 mit einem Schmierkanalsystem 36 in Verbindung steht, das den Schmierstoff zu den Wälzkörperumläufen 22 führt, um dort die Wälzkörper 24 zu schmieren. Auf diese Weise ist sichergestellt, dass der Schmierstoff unabhängig davon, ob er über die zentrale Anschlussstelle 30a oder eine der seitlichen Anschlussstellen 30b, 30c zugeführt wird, gleichmäßig auf alle vier Wälzkörperumläufe 22 verteilt wird. Obgleich dies in Fig. 2 und 3 nicht dargestellt ist, kann in dem Schmierkanal 36 ferner ein Dochtelement angeordnet sein, das einer beispielsweise gravitationsbedingten Ungleichverteilung des Schmierstoffs zwischen den oberen und unteren Wälzkörperumläufen 22 entgegenwirkt.

Gemäß Fig. 2 sind sowohl das Basisteil 26 als auch das Einlegeteil 28 der Endplatteneinheit 18 im Wesentlichen U-förmig ausgebildet mit einem sich im Wesentlichen in Querrichtung Q erstreckenden Basisschenkel 26a bzw. 28a der U-Form und zwei sich im Wesentlichen in Höhenrichtung H erstreckenden freien U-Schenkeln 26b, 26c bzw. 28b, 28c. Mit dieser U-Form umgreift der Führungswagen 14 die Führungsschiene 12 auf einem Teil ihres Umfangs. Die Schmierstoff-Verteilungsnut 34 verläuft in dem dargestellten Ausführungsbeispiel im Wesentlichen in Querrichtung Q und damit in Umfangsrichtung um die Führungsschiene 12.

Bei der Montage der Endplatteneinheit 18 am Hauptkörper 16 des Führungswagens 14 wird die Endplatteneinheit 18 mit ihrer Anlagefläche 18d an eine entsprechende Gegenanlagefläche 16a des Hauptkörpers 16 angelegt. Dann werden die Befestigungsschrauben 20 durch die Durchgangslöcher 40 hindurchgeführt und mit dem Hauptkörper 16 des Führungswagens 14 verschraubt. Dabei wird die Anlagefläche 18d fest gegen die Gegenanlagefläche 16a des Hauptkörpers 16 angedrückt.

Um ein Austreten von Schmierstoff aus der Schmiernut 34 verhindern zu können, verfügt die am Einlegeteil 28 ausgebildete Anlagefläche 18d der Endplatteneinheit 18 der Schmierstoff-Verteilungsnut 34 unmittelbar benachbart über einen gegenüber der restlichen Anlagefläche 18e erhöhten Flächenabschnitt 18f. In dem dargestellten Ausführungsbeispiel ist dieser erhöhte Flächenabschnitt 18f im Wesentlichen rampenartig ausgebildet. Im Bereich der Verbindungslinie V der Durchgangslöcher 40 für die beiden Befestigungsschrauben 20, d.h. im Bereich der beiden in Fig. 3 mit 18f1 markierten Stellen befindet sich der erhöhte Flächenabschnitt 18f noch im Wesentlichen auf dem gleichen Niveau wie die restliche Anlagefläche 18e, d.h. der nicht vom erhöhten Flächenabschnitt 18f eingenommene Flächenabschnitt 18e der Anlagefläche 18d, der im Wesentlichen orthogonal zur Längsrichtung L und im Wesentlichen in einer Ebene verläuft. Von dort steigt der erhöhte Flächenabschnitt 18f dann in Höhenrichtung H bis zu den in Fig. 3 mit 18f2 markierten Stellen bzw. oberen Ecken an. Dort weist der erhöhte Flächenabschnitt 18f eine erste vorbestimmte Überhöhung gegenüber der restlichen Anlagefläche 18e auf, die beispielsweise 0,1 mm betragen kann. Der Verlauf des Rands des erhöhten Flächenabschnitts 18f2 zwischen den Punkten 18f1 und 18f2 kann dabei sowohl geradlinig als auch gekrümmt, beispielsweise konvex verlaufen.

Darüber hinaus steigt der erhöhte Flächenabschnitt 18f auch in Querrichtung Q an. Und zwar erreicht die Überhöhung gegenüber der restlichen Anlagefläche 18e im Wesentlichen in der Mitte zwischen den beiden Punkten 18f1, d.h. etwa an der in Fig. 3 mit 18f3 markierten Stelle, einen zweiten vorbestimmten Wert, der beispielsweise 0,15mm betragen kann. Etwa im Bereich der Mitte zwischen den beiden Punkten 18f2, d.h. an der in Fig. 3 mit 18f4 markierten Stelle, kann die Überhöhung sogar einen dritten vorbestimmten Wert annehmen, der beispielsweise 0,35 mm betragen kann. Auch der Verlauf der Anstiege von den Punkten 18f1 zum Punkt 18f3 bzw. von den Punkten 18f2 zum Punkt 18f4 kann geradlinig oder gekrümmt, beispielsweise konvex gekrümmt, verlaufen.

Festzuhalten ist noch, dass der Rand des erhöhten Flächenabschnitts 18f jeweils zwischen den Punkten 18f1 und 18f2 sowie zwischen den beiden Punkten 18f2 als abrupte Stufe ausgebildet sind. D.h. der Übergang von dem erhöhten Flächenabschnitt 18f zur restlichen Anlagefläche 18d erfolgt im Wesentlichen diskontinuierlich.

Wird nun die Endplatteneinheit 18 mittels der Befestigungsschrauben 20 mit ihrer Anlagefläche 18d gegen die Gegenanlagefläche 16a des Hauptkörpers 16 des Führungswagens 14 angedrückt, so gelangt als erstes der erhöhte Flächenabschnitt 18f in Kontakt mit der Gegenanlagefläche 16a und wird im Zuge des weiteren Festziehens der Befestigungsschrauben 20 zwischen der Endplatteneinheit 18 und dem Hauptkörper 16 des Führungswagens 14 komprimiert. Da der erhöhte Flächenabschnitt 18f die Schmiernut 34 unmittelbar umgibt, wirkt er aufgrund der Weichheit seines Kunststoffmaterials als ein elastisches Dichtungselement, das den Austritt von Schmierstoff aus der Schmiernut 34 verhindert.

Sollte diese Dichtungswirkung aufgrund der Kompression des weicheren Materials des erhöhten Flächenabschnitts 18f nicht ausreichen, so kann, wie dies in den Fig. 2 und 3 dargestellt ist, die Schmiernut 34 ferner von einer, vorzugsweise unmittelbar am Rand der Schmiernut 34 angeordneten, Dichtlippe 42 umgeben sein, die von dem erhöhten Flächenabschnitt 18f in Richtung zum Hauptkörper 16 des Führungswagens 14 vorsteht. Diese Dichtlippe 42 kann entweder eine längs ihres gesamten Verlaufs konstante Höhe aufweisen oder von ihren in Querrichtung Q äußeren Abschnitten 42a zu ihren inneren Abschnitten 42b, welche der Durchtrittsöffnung 38 benachbart sind, bzw. 42c, welche der Durchtrittsöffnung 38 gegenüberliegt, hin ansteigen, was zu einer noch weiteren Überhöhung führt.

Nachzutragen ist noch, dass der erhöhte Flächenabschnitt 18f in Fig. 3 im Unterschied zur Darstellung gemäß Fig. 2 durch Punktierung noch deutlicher hervorgehoben ist.

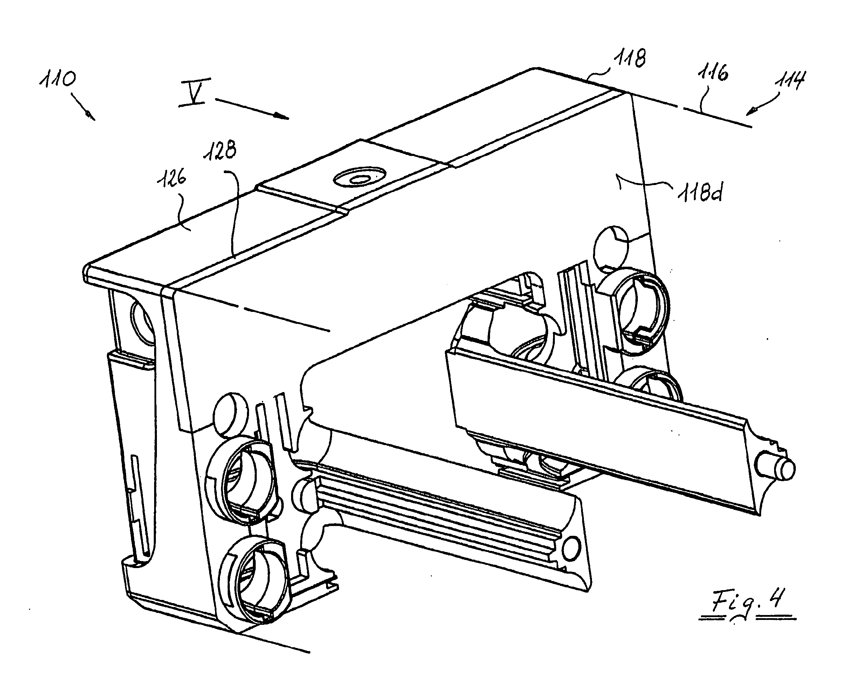

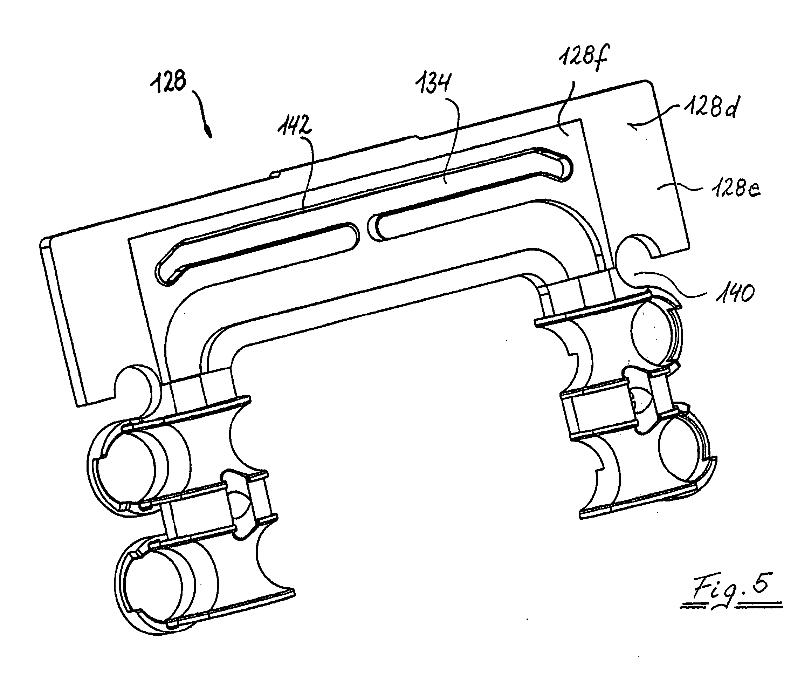

In den Fig. 4 und 5 ist eine weitere Ausführungsform einer erfindungsgemäßen Linearvorrichtung dargestellt, welche in weiten Teilen der vorstehend erläuterten Ausführungsform entspricht. In Fig. 4 und 5 sind daher analoge Teile mit gleichen Bezugszeichen versehen wie in Fig. 1 bis 3, jedoch vermehrt um die Zahl 100. Darüber hinaus wird die Ausführungsform gemäß Fig. 4 und 5 im Folgenden nur insoweit beschrieben werden, als sie sich von der Ausführungsform gemäß Fig. 1 bis 3 unterscheidet, auf deren Beschreibung ansonsten hiermit ausdrücklich verwiesen sei.

Auch bei der Linearvorrichtung 110 gemäß Fig. 4 und 5 umfasst der Führungswagen 114 einen Hauptkörper 116 (in Fig. 4 lediglich gestrichelt angedeutet) und zwei Endplatteneinheiten 118, von denen in Fig. 4 lediglich eine dargestellt ist. Ferner umfasst die Endplatteneinheit 118 ein Basisteil 126 und ein Einlegeteil 128. An dem Einlegeteil 128 ist die Anlagefläche 118d ausgebildet, mit welcher die Endplatteneinheit 118 an dem Hauptkörper 116 des Führungswagens 114 anliegt. Wie in Fig. 4 dargestellt, ist diese Anlagefläche 118d im Wesentlichen plan ausgebildet und liegt somit an der Stirnfläche des Hauptkörpers 116 vollflächig an.

Fig. 5 stellt, wie man durch einen Vergleich der Fig. 3 und 5 leicht erkennt, eine Rückansicht des Einlegeteils 128 der in Fig. 4 dargestellten Endplatteneinheit 118 dar, d.h. eine Ansicht aus Richtung des Pfeils V in Fig. 4. Der Unterschied zwischen dem Einlegeteil 28 gemäß Fig. 3 und dem Einlegeteil 128 gemäß Fig. 5 besteht nun hauptsächlich darin, dass die Schmiernut 134 nicht in der Anlagefläche 118d (siehe Fig. 4) ausgebildet ist, sondern in der von dieser abgewandten weiteren Anlagefläche 128d, mit welcher das Einlegeteil 128 an einer Gegenanlagefläche des Basisteils 126 anliegt.

Um ein Austreten von Schmierstoff aus der Schmiernut 134 verhindern zu können, verfügt die weitere Anlagefläche 128d der Schmiernut 134 unmittelbar benachbart über einen gegenüber der restlichen Anlagefläche 128e erhöhten Flächenabschnitt 128f. Hinsichtlich der rampenartigen Ausbildung dieses erhöhten Flächenabschnitts 128f, des zusätzlichen Vorsehens einer die Schmiernut 134 unmittelbar umgebenden Dichtlippe 142, der Materialwahl für das Einlegeteil 128 und das Basisteil 126 sowie weiterer Merkmale des erhöhten Flächenabschnitts 128f sei auf die vorstehende Beschreibung der Ausführungsform gemäß Fig. 2 und 3 verwiesen.

Bei der Befestigung der Endplatteneinheit 118 am Hauptkörper 116 des Führungswagens 114 mittels der durch die Durchgangslöcher 140 hindurch geführten Befestigungsschrauben gelangt die Anlagefläche 118d in vollflächige Anlage an die Stirnfläche des Hauptkörpers 116, wodurch die weitere Anlagefläche 128d und insbesondere deren erhöhter Flächenabschnitt 128f in Anlage gegen die Gegenanlagefläche des Basisteils 126 der Endplatteneinheit 118 gedrückt wird. Hierdurch wird der erhöhte Flächenabschnitt 128f komprimiert, was für die Abdichtung der gesamten Anordnung gegen einen unerwünschten Austritt von Schmierstoff aus der Schmiernut 134 sorgt.

Höchstvorsorglich sei nochmals darauf hingewiesen, dass die die Erfindung tragenden Gedanken nicht nur bei einer Schienenführung mit Vorteil zum Einsatz gebracht werden können sein, bei welcher die stangenförmige erste Funktionseinheit eine Führungsschiene umfasst, und die zweite Funktionseinheit einen Führungswagen umfasst. Vielmehr kann sie auch bei anderen Arten von Linearführungsvorrichtungen oder bei Linearantrieben eingesetzt werden, so bei einer Wälzkörperbüchsenführung, beispielsweise einer Kugelbüchsenführung, wobei die stangenförmige erste Funktionseinheit eine Rundwelle umfasst, und die zweite Funktionseinheit eine Wälzkörperbüchse umfasst, bei einer Keilwellenführung, wobei die stangenförmige erste Funktionseinheit eine Profilwelle umfasst, und die zweite Funktionseinheit eine Wälzkörperbüchse umfasst, oder bei einem Wälzkörpergewindetrieb, wobei die stangenförmige erste Funktionseinheit eine Gewindespindel umfasst, und die zweite Funktionseinheit eine Wälzkörpermutter umfasst.

## Patentansprüche

1. Linearvorrichtung (10) mit einer ersten, im Wesentlichen stangenförmig ausgebildeten Funktionseinheit (12) und einer zweiten, die stangenförmige Funktionseinheit (12) zumindest teilweise umgreifenden Funktionseinheit (14),
wobei die beiden Funktionseinheiten (12, 14) mittels wenigstens eines endlosen Wälzkörperumlaufs (22) relativ zueinander bewegbar sind, der einen lasttragenden Wälzkörperkanalabschnitt (12a/22a), einen Rückführkanalabschnitt (22b) und zwei den lasttragenden Wälzkörperkanalabschnitt (12a/22a) und den Rückführkanalabschnitt (22b) miteinander verbindende Umlenkkanalabschnitte (18a) umfasst,
wobei die zweite Funktionseinheit (14) einen Hauptkörper (16) sowie wenigstens eine Endplatteneinheit (18) umfasst, die mit einer Anlagefläche (18d) an einer Stirnseite (16a) des Hauptkörpers (16) anliegt und in der ein Umlenkkanalabschnitt (18a) des Wälzkörperumlaufs (22) ausgebildet ist,
wobei in der Endplatteneinheit (18) eine sich zumindest teilweise in Umfangsrichtung um die stangenförmige Funktionseinheit (12) erstreckende und zur Anlagefläche (18d) hin offene Schmiernut (34) vorgesehen ist,
**dadurch gekennzeichnet, dass** die Endplatteneinheit (18) an dem Hauptkörper (16) mittels lediglich zweier Befestigungselemente (20) befestigbar ist, und dass ein der Schmiernut (34) benachbart angeordneter und diese Schmiernut (34) umgebender Abschnitt (18f) der Anlagefläche (18d) gegenüber der restlichen Anlagefläche (18e) erhöht ausgebildet ist.

2. Linearvorrichtung (110) mit einer ersten, im Wesentlichen stangenförmig ausgebildeten Funktionseinheit und einer zweiten, die stangenförmige Funktionseinheit zumindest teilweise umgreifenden Funktionseinheit (114),
wobei die beiden Funktionseinheiten mittels wenigstens eines endlosen Wälzkörperumlaufs relativ zueinander bewegbar sind, der einen lasttragenden Wälzkörperkanalabschnitt, einen Rückführkanalabschnitt und zwei den lasttragenden Wälzkörperkanalabschnitt und den Rückführkanalabschnitt miteinander verbindende Umlenkkanalabschnitte umfasst,
wobei die zweite Funktionseinheit (114) einen Hauptkörper (116) sowie wenigstens eine Endplatteneinheit (118) umfasst, die mit einer Anlagefläche (118d) an einer Stirnfläche des Hauptkörpers (116) anliegt und in der ein Umlenkkanalabschnitt des Wälzkörperumlaufs ausgebildet ist,
wobei die Endplatteneinheit (118) ein Basisteil (126) und ein die Anlagefläche (118d) umfassendes Einlegeteil (128) umfasst, welches mit einer weiteren Anlagefläche (128d) an einer Gegenanlagefläche des Basisteils (126) anliegt,
wobei in dem Einlegeteil (128) eine sich zumindest teilweise in Umfangsrichtung um die stangenförmige Funktionseinheit erstreckende und zu der weiteren Anlagefläche (128d) hin offene Schmiernut (134) vorgesehen ist, und
wobei die Endplatteneinheit (118) an dem Hauptkörper (116) mittels lediglich zweier Befestigungselemente befestigbar ist, und dass ein der Schmiernut (134) benachbart angeordneter und diese Schmiernut (134) umgebender Abschnitt (128f) der weiteren Anlagefläche (128d) gegenüber der restlichen weiteren Anlagefläche (128e) erhöht ausgebildet ist.

3. Linearvorrichtung nach Anspruch 1 oder 2,
**dadurch gekennzeichnet, dass** die Endplatteneinheit (18,118) ein Basisteil (26,126) und ein die Anlagefläche (18d,128d) umfassendes Einlegeteil (28,128) umfasst, wobei das Einlegeteil (28,128) aus einem weicheren Material, insbesondere Kunststoff, gefertigt ist als das Basisteil (26,126).

4. Linearvorrichtung nach einem der Ansprüche 1 bis 3,
**dadurch gekennzeichnet, dass** die Schmiernut (34,134) zumindest teilweise von einer Dichtlippe (42,142) umgeben ist.

5. Linearvorrichtung nach Anspruch 4,
**dadurch gekennzeichnet, dass** die Höhe der Dichtlippe (42,142) über dem erhöhten Abschnitt (18f,128f) in einer zur Verbindungslinie (V) zwischen den Befestigungselementen (20,120) im Wesentlichen parallel verlaufenden Richtung (Q) im Allgemeinen konvex verläuft.

6. Linearvorrichtung nach einem der Ansprüche 1 bis 5,
**dadurch gekennzeichnet, dass** der Abstand des erhöhten Abschnitts (18f,128f) von der restlichen Anlagefläche (18e,128e) in einer von der Verbindungslinie (V) zwischen den Befestigungselementen (20,120) zum Rand der Endplatte (18,118) hin weisenden und vorzugsweise orthogonal zu der Verbindungslinie (V) verlaufenden Richtung (H) zunimmt.

7. Linearvorrichtung nach einem der Ansprüche 1 bis 6,
**dadurch gekennzeichnet, dass** der erhöhte Abschnitt (18f,128f) in einer zur Verbindungslinie (V) zwischen den Befestigungselementen (20,120) im Wesentlichen parallel verlaufenden Richtung (Q) im Allgemeinen konvex verläuft.

8. Linearvorrichtung nach einem der Ansprüche 1 bis 7,
**dadurch gekennzeichnet, dass** sich der erhöhte Abschnitt (18f,128f) zumindest der Verbindungslinie (V) zwischen den Befestigungselementen (20,120) benachbart im Wesentlichen auf dem Niveau der restlichen Anlagefläche (18e,128e) befindet.

9. Linearvorrichtung nach einem der Ansprüche 1 bis 8,
**dadurch gekennzeichnet, dass** die Schmiernut (34,134) eine Schmierstoff-Verteilungsnut ist, welche zum einen mit wenigstens zwei Anschlussstellen (30a,30b,30c) zum Zuführen von Schmierstoff und zum anderen über einen Durchgang (38) mit einem Schmierkanalsystem (36) in Verbindung steht.

10. Linearvorrichtung nach einem der Ansprüche 1 bis 9,
**dadurch gekennzeichnet, dass** sie eine Linearführungsvorrichtung (10,110) ist.

11. Linearvorrichtung nach Anspruch 10,
**dadurch gekennzeichnet, dass** die Linearführungsvorrichtung eine Schienenführung (10,110) ist, wobei die stangenförmige erste Funktionseinheit eine Führungsschiene (12) umfasst, und die zweite Funktionseinheit einen Führungswagen (14,114) umfasst.

12. Linearvorrichtung nach Anspruch 10,
**dadurch gekennzeichnet, dass** die Linearführungsvorrichtung eine Wälzkörperbüchsenführung ist, wobei die stangenförmige erste Funktionseinheit eine Rundwelle umfasst, und die zweite Funktionseinheit eine Wälzkörperbüchse umfasst.

13. Linearvorrichtung nach Anspruch 10,
**dadurch gekennzeichnet, dass** die Linearführungsvorrichtung eine Keilwellenführung ist, wobei die stangenförmige erste Funktionseinheit eine Profilwelle umfasst, und die zweite Funktionseinheit eine Wälzkörperbüchse umfasst.

14. Linearvorrichtung nach einem der Ansprüche 1 bis 9,
**dadurch gekennzeichnet, dass** sie eine Linearantriebsvorrichtung ist.

15. Linearvorrichtung nach Anspruch 14,
**dadurch gekennzeichnet, dass** die Linearantriebsvorrichtung ein Wälzkörpergewindetrieb ist, wobei die stangenförmige erste Funktionseinheit eine Gewindespindel umfasst, und die zweite Funktionseinheit eine Wälzkörpermutter umfasst.

## Claims

1. A linear device (10) with a first substantially rod-shaped functional unit (12) and a second functional unit (14) which at least partially encompasses the rod-shaped functional unit (12),
wherein the two functional units (12,14) can be moved relative to one another by means of at least one endless rolling body recirculating unit (22) which comprises a load-bearing rolling body channel section (12a/22a), a return channel section (22b) and two deflecting channel sections (18a) which join together the load-bearing rolling body channel section (12a/22a) and the return channel section (22b),
wherein the second functional unit (14) comprises a main body (16) and at least one end plate unit (18) which abuts with a contact surface (18d) against an end face (16a) of the main body (16) and in which one deflecting channel section (18a) of the rolling body recirculating unit (22) is formed,
wherein a lubrication groove (34), which is open towards the contact surface (18d) and extends at least partly in a circumferential direction around the rod-shaped functional unit (12), is provided in the end plate unit (18),
**characterised in that** the end plate unit (18) can be fastened to the main body (16) by means of only two fastening elements (20), and **in that** a portion (18f) of the contact surface (18d) adjacent the lubrication groove (34) and surrounding this lubrication groove (34) is formed raised in relation to the rest of the contact surface (18e).

2. A linear device (110) with a first substantially rod-shaped functional unit (112) and a second functional unit (114) which at least partially encompasses the rod-shaped functional unit,
wherein the two functional units can be moved relative to one another by means of at least one endless rolling body recirculating unit which comprises a load-bearing rolling body channel section, a return channel section and two deflecting channel sections which join together the load-bearing rolling body channel section and the return channel section,
wherein the second functional unit (114) comprises a main body (116) and at least one end plate unit (118) which abuts with a contact surface (118d) against an end face of the main body (116) and in which one deflecting channel section of the rolling body recirculating unit is formed,
wherein the end plate unit (118) comprises a base part (126) and an insert part (128) which includes the contact surface (118d) and which abuts with a further contact surface (128d) against a counterpart contact surface of the base part (134),
wherein a lubrication groove (134), which is open towards the further contact surface (128d) and extends at least partly in a circumferential direction around the rod-shaped functional unit, is provided in the insert part (128),
wherein the end plate unit (118) can be fastened to the main body (116) by means of only two fastening elements (20), and in that a portion (128f) of the further contact surface (18d) adjacent the lubrication groove (134) and surrounding this lubrication groove (134) is formed raised in relation to the rest of the further contact surface (128e).

3. A linear device according to Claim 1 or 2, **characterised in that** the end plate unit (18,118) comprises a base part (26,126) and an insert part (28,128) which includes the contact surface (18d,128d), wherein the insert part (28,128) is made of a material, in particular plastics material, which is softer than the base part (26,126).

4. A linear device according to any one of Claims 1 to 3, **characterised in that** the lubrication groove (34,134) is surrounded at least partly by a sealing lip (42,142).

5. A linear device according to Claim 4, **characterised in that** the height of the sealing lip (42,142) above the raised portion (18f,128f) extends in a generally convex fashion in a direction (Q) extending substantially parallel to the connecting line (V) between the fastening elements (20,120).

6. A linear device according to any one of Claims 1 to 5, **characterised in that** the distance of the raised portion (18f,128f) from the rest of the contact surface (18e,128e) increases in a direction (H) extending from the connecting line (V) between the fastening elements (20,120) and facing towards the edge of the end plate (18,118) and preferably orthogonally to the connecting line (V).

7. A linear device according to any one of Claims 1 to 6, **characterised in that** the raised portion (18f,128f) extends in a generally convex fashion in a direction (Q) extending substantially parallel to the connecting line (V) between the fastening elements (20,120).

8. A linear device according to any one of Claims 1 to 7, **characterised in that** the raised portion (18f,128f), at least adjacent to the connecting line (V) between the fastening elements (20,120), is situated substantially at the level of the rest of the contact surface (18e,128e).

9. A linear device according to any one of Claims 1 to 8, **characterised in that** the lubrication groove (34,134) is a lubricant distributing groove which is connected, firstly, to at least two connection points (30a,30b,30c) for supplying lubricant and, secondly, via a passage (38) to a lubrication duct system (36).

10. A linear device according to any one of Claims 1 to 9, **characterised in that** it is a linear guide device (10,110).

11. A linear device according to Claim 10, **characterised in that** the linear guide device is a rail guide (10,110), wherein the rod-shaped first functional unit comprises a guide rail (12) and the second functional unit comprises a guide carriage (14,114).

12. A linear device according to Claim 10, **characterised in that** the linear guide device is a rolling body bushing guide, wherein the rod-shaped first functional unit comprises a circular shaft and the second functional unit comprises a rolling body bushing.

13. A linear device according to Claim 10, **characterised in that** the linear guide device is a splined shaft guide, wherein the rod-shaped first functional unit comprises a profiled shaft and the second functional unit comprises a rolling body bushing.

14. A linear device according to any one of Claims 1 to 9, **characterised in that** it is a linear drive device.

15. A linear device according to Claim 14, **characterised in that** the linear drive device is a roller body lead screw, wherein the rod-shaped first functional unit comprises a threaded spindle and the second functional comprises a rolling body nut.

## Revendications

1. Dispositif linéaire (10) comprenant une première unité fonctionnelle (12) réalisée essentiellement en forme de tige, et une seconde unité fonctionnelle (14) qui entoure au moins partiellement l'unité fonctionnelle en forme de tige (12),
dans lequel les deux unités fonctionnelles (12, 14) sont déplaçables l'une par rapport à l'autre au moyen d'au moins un système à recirculation sans fin de corps de roulement (22), qui comprend un tronçon de canal (12a/22a) pour corps de roulement et destiné à supporter une charge, un tronçon de canal de retour (22b) et deux tronçons de canaux de renvoi (18a) qui relient l'un à l'autre le tronçon de canal destiné à supporter une charge (12a/22a) et le tronçon de canal de retour (22b),
dans lequel la seconde unité fonctionnelle (14) comprend un corps principal (16) ainsi qu'au moins une unité à plaque terminale (18) qui s'appuie par une surface d'appui (18d) contre une face frontale (16a) du corps principal (16), et dans laquelle est réalisé un tronçon de canal de renvoi (18a) du système à recirculation (22),
dans lequel une gorge de lubrification (34) qui s'étend au moins partiellement en direction périphérique autour de l'unité fonctionnelle en forme de tige (12) et qui est ouverte vers la surface d'appui (18d) est prévue dans l'unité à plaque terminale (18),
**caractérisé en ce que** l'unité à plaque terminale (18) est susceptible d'être fixée sur le corps principal (16) au moyen de seulement deux éléments de fixation (20), et **en ce qu'**un tronçon (18f) de la surface d'appui (18d) agencé au voisinage de la gorge de lubrification (34) et entourant cette gorge de lubrification (34) est réalisé de façon surélevée par rapport au reste de la surface d'application (18e).

2. Dispositif linéaire (110) comprenant une première unité fonctionnelle réalisée essentiellement en forme de tige, et une seconde unité fonctionnelle (114) qui entoure au moins partiellement l'unité fonctionnelle en forme de tige,
dans lequel les deux unités fonctionnelles sont déplaçables l'une par rapport à l'autre au moyen d'au moins un système à recirculation sans fin de corps de roulement, qui comprend un tronçon de canal pour corps de roulement et destiné à supporter une charge, un tronçon de canal de retour et deux tronçons de canal de renvoi qui relient l'un à l'autre le tronçon de canal destiné à supporter une charge et le tronçon de canal de retour,
dans lequel la seconde unité fonctionnelle (114) comprend un corps principal (116) ainsi qu'au moins une unité à plaque terminale (118), qui s'appuie par une surface d'appui (118d) contre une surface frontale du corps principal (116) et dans laquelle est réalisé un tronçon de canal de renvoi du système à recirculation,
dans lequel l'unité à plaque terminale (118) comprend une partie de base (126) et une partie d'insert (128) qui inclut la surface d'appui (118d) et qui s'applique par une autre surface d'appui (128d) contre une surface antagoniste de la partie de base (126),
dans lequel une gorge de lubrification (134), qui s'étend au moins partiellement en direction périphérique autour de l'unité fonctionnelle en forme de tige et qui est ouverte vers l'autre surface d'appui (128d) est prévue dans la partie d'insert (128), et
l'unité à plaque terminale (118) est susceptible d'être fixée sur le corps principal (116) au moyen de seulement deux éléments de fixation, et en ce qu'un tronçon (128f) de l'autre surface d'appui (128d), agencé au voisinage de la gorge de lubrification (134) et entourant ladite gorge de lubrification (134), est réalisé de manière surélevée par rapport au reste de l'autre surface d'appui (128e).

3. Dispositif linéaire selon la revendication 1 ou 2,
**caractérisé en ce que** l'unité à plaque terminale (18, 118) comprend une partie de base (26, 126) et une partie d'insert (28, 128) qui comprend la surface d'appui (28d, 128d), ladite partie d'insert (28, 128) étant réalisée en un matériau plus tendre que l'unité de base (26, 126), en particulier en matière plastique.

4. Dispositif linéaire selon l'une des revendications 1 à 3,
**caractérisé en ce que** la gorge de lubrification (34, 134) est entourée au moins partiellement par une lèvre d'étanchement (42, 142).

5. Dispositif linéaire selon la revendication 4,
**caractérisé en ce que** la hauteur de la lèvre d'étanchéité (42, 142) au-dessus du tronçon (18f, 128f) surélevé s'étend de manière généralement convexe dans une direction (Q) qui s'étend sensiblement parallèlement à la ligne de liaison (V) entre les éléments de fixation (20, 120).

6. Dispositif linéaire selon l'une des revendications 1 à 5,
**caractérisé en ce que** la distance du tronçon (18f, 128f) en surélévation augmente depuis la surface d'appui restante (18e, 128e) dans une direction allant de la ligne de liaison (V) entre les éléments de fixation (20, 120) vers la bordure de la plaque terminale (18, 118) et de préférence perpendiculaire à cette ligne de liaison (V).

7. Dispositif linéaire selon l'une des revendications 1 à 6,
**caractérisé en ce que** le tronçon (18f, 128f) en surélévation s'étend de manière généralement convexe dans une direction (Q) parallèle à la ligne de liaison (V) entre les éléments de fixation (20, 120).

8. Dispositif linéaire selon l'une des revendications 1 à 7,
**caractérisé en ce que** le tronçon (18f, 128f) surélevé se trouve au moins au voisinage de la ligne de liaison (V) entre les éléments de fixation (20, 120) essentiellement au niveau de la surface d'appui restante (18e, 128e).

9. Dispositif linéaire selon l'une des revendications 1 à 8,
**caractérisé en ce que** la gorge de lubrification (34, 134) est une gorge de répartition de lubrifiant, laquelle communique d'une part avec au moins deux emplacements de raccordement (30a, 30b, 30c) pour l'admission de lubrifiant et d'autre part avec un système de canaux de lubrification (36) via une traversée (38).

10. Dispositif linéaire selon l'une des revendications 1 à 9,
**caractérisé en ce qu'**il est un dispositif de guidage linéaire (10, 110).

11. Dispositif linéaire selon la revendication 10,
**caractérisé en ce que** le dispositif de guidage linéaire est un guidage sur rail (10, 110), dans lequel la première unité fonctionnelle en forme de tige comprend un rail de guidage (12), et la seconde unité fonctionnelle comprend un chariot de guidage (14, 114).

12. Dispositif linéaire selon la revendication 10,
**caractérisé en ce que** le dispositif de guidage linéaire est un guidage en manchon pour corps de roulement, dans lequel la première unité fonctionnelle en forme de tige comprend un arbre rond et la seconde unité fonctionnelle comprend un manchon pour corps de roulement.

13. Dispositif linéaire selon la revendication 10,
**caractérisé en ce que** le dispositif de guidage linéaire est un guidage à arbre conique, dans lequel la première unité fonctionnelle en forme de tige comprend un arbre profilé et la seconde unité fonctionnelle comprend un manchon pour corps de roulement.

14. Dispositif linéaire selon l'une des revendications 1 à 9,
**caractérisé en ce qu'**il est un dispositif d'entraînement linéaire.

15. Dispositif linéaire selon la revendication 14,
**caractérisé en ce que** le dispositif d'entraînement linéaire est un entraînement à broche pour corps de roulement, dans lequel la première unité fonctionnelle en forme de tige comprend une broche filetée et la seconde unité fonctionnelle comprend un écrou pour corps de roulement.
